# EUROPEAN PATENT APPLICATION

(11) **EP 3 587 077 A1**
(43) Date of publication of application: **01.01.2020**
(21) Application number: 18179188.0
(22) Date of filing: 21.06.2018
(51) Int. Cl.: B29C 64/209, B29C 64/241, B29C 64/393, B29C 64/343, B29C 64/118

(54) **ADDITIVE MANUFACTURING**

(71) Applicant: Technische Universität München, 80333 München (DE)
(72) Inventor: Matschinski, Alexander, 80337 Munich (DE)
(74) Representative: Koplin, Moritz

(57) **Abstract**

Provided are an additive manufacturing system (10) and a method where a speed at which material is passed to a head (18) is controlled based on marks (36) on the material surface.

## Description

### FIELD

The present disclosure relates to additive manufacturing. In particular, the present disclosure relates to controlling a material flow within an additive manufacturing system.

### BACKGROUND

Additive manufacturing typically refers to techniques which are used to create a three-dimensional object in which material layers are successively deposited. As the layer thickness depends on the speed at which material is output, controlling the material flow is an important factor for achieving feasible results.

### SUMMARY

The present disclosure provides an additive manufacturing system and an additive manufacturing method.

The additive manufacturing system comprises a head having a nozzle; a feeder; a detector; and a controller. The system is configured to extrude a material which is passed to the head by the feeder through the nozzle, the detector is configured to detect marks on the surface of the material, and the controller is configured to control a speed at which the material is passed to the head by the feeder, based on the detected marks.

Notably, the term "nozzle", as used throughout the description and the claims, in particular refers to a device designed to control the characteristics of a flowable material as it exits an enclosed chamber or pipe. For example, the nozzle controls the extrusion width and the (cross-sectional) shape of the extruded material stream. In this regard, the term "head", as used throughout the description and the claims, in particular refers to a unit comprising the nozzle and a heating element to increase the flowability of the material. Moreover, the term "controller", as used throughout the description and the claims, in particular refers to a device which controls the position of the head relative to the manufactured article in accordance with a pre-computed trajectory along which the flowable material is to be deposited.

Furthermore, the term "feeder", as used throughout the description and the claims, in particular refers to a unit comprising an electric motor (e.g. a stepper motor) coupled to a drive gear or pinch wheel. During operation, the drive gear or pinch wheel is in frictional contact with a filament of the material to be extruded. Upon rotation of the motor, the filament is withdrawn from a supply unit such as, for example, a spool, and fed (by pressure) to the head. The feeding speed may be chosen in accordance with the amount of extruded material required at a current (relative) position of the head while taking into account the relative motion between the head and the growing object. Once extruded, the hot material (e.g., a thermoplastic) may fuse with the material of the layer on which it is deposited.

If data on the force with which the feeder feeds the filament to the head is available (e.g., by measuring a torque or power drawn by the feeder), the relative motion between the head and the growing object may also be controlled in a way that said force remains constant. If data on the force with which the feeder feeds the filament to the head is not available, a pressure within the nozzle may be directly measured and the relative motion between the head and the growing object may be controlled in a way that said pressure remains constant. In both cases, a substantially constant layer thickness may be achieved without (pre-computed) data on a required relative speed (between the head and the growing object) and a corresponding feeding speed. Notably, the steps of measuring the pressure within the nozzle and controlling the relative motion between the head and the growing object such that said pressure remains constant can also be employed if the filament is replaced by granules.

Moreover, the term "detector", as used throughout the description and the claims, in particular refers to a sensor that detects events or changes in its environment and outputs the gathered data to an electronic device. The electronic device may include a processor that consumes the data and outputs signals concerning the state of the system. In this regard, the term "mark", as used throughout the description and the claims, in particular refers to an intentional change in the appearance of a surface area that makes said surface area discernible (by the detector) from adjacent surface areas. For example, the surface area may be discernible by having another color than adjacent surface areas or by having another (cross-sectional) shape than adjacent surface areas.

The detector may comprise an optical sensor.

For example, the optical sensor may be positioned between the feeder and the head along the feeding path. The sensor may continuously monitor the color or shape of the surface of the filament for changes that represent a mark. To achieve consistent lighting conditions, the detector may also comprise a light source that illuminates the surface of the filament that passes by the sensor.

The detector may comprise a tactile sensor.

For example, the tactile sensor may be positioned between the feeder and the head along the feeding path and continuously monitor the shape of the surface of the filament for changes that represent a mark.

The feeder may be configured to provide the marks to the material.

For example, the teeth of the drive gear may leave marks on the filament.

The detector may be configured to determine the speed at which the material is passed to the head based on measuring a time interval between a first instant at which the detector detects a first mark and a second instant at which the detector detects a second mark.

For example, the distance between consecutive marks may be constant and the detector may determine the speed by dividing the distance by the time interval. Moreover, the distance may be stored in a non-volatile memory of the detector by the manufacturer or the user.

The marks may be indentations and the detector may be configured to analyze the indentations for feeder contact pressure.

For example, the depth of the indentations may be compared to a reference. If the mean depth is smaller than expected, the contact pressure may be increased, or the user may be prompted to manually increase the contact pressure. If the mean depth is larger than expected, the contact pressure may be decreased, or the user may be prompted to manually decrease the contact pressure.

The marks may be indentations and the detector may be configured to analyze the indentations for feeder wear.

For example, a height profile of the indentations may be compared to a reference and if the mean depth is smaller and the profile is less pointed than expected, a user may be prompted to check/replace the feeder or feeder components.

The marks may be indentations and the detector may be configured to analyze the indentations for feeder slippage.

For example, a height profile of the indentations may be compared to a reference and if the mean depth is larger and the profile is less pointed than expected, a user may be prompted to check the feeder for slippage.

The feeder may be configured to provide a series of discernible marks to the filament and the detector may be configured to assess missing marks as a sign of slippage.

For example, the centers of the teeth of the drive gear may be spaced apart from each other in a direction perpendicular to the feeding direction such that each indentation can be mapped to a tooth by its lateral (or circumferential) position on the filament. Alternatively or in addition, the teeth or tooth-tips may be differently shaped resulting in indentations of different shapes and/or dimensions.

The detector may comprise two sensors that are arranged at a pre-determined distance along the material path and may be configured to determine a time that passes between a first instant at which a first sensor of the two sensors detects a mark and a second instant at which a second sensor of the two sensors detects said mark.

Thus, the feeding speed may be determined by dividing the distance by the time-interval between the first and second instant.

The additive manufacturing method comprises passing, by a feeder, a filament to a head having a nozzle, while passing the filament to the head, detecting marks on the surface of the filament that passes by and controlling a speed at which the filament is passed to the head based on the detected marks, and extruding the filament material through the nozzle.

In this regard, the term "filament", as used throughout the description and the claims, in particular refers to a (cylindrical) strand or rod of a flexible material. When the speed at which the filament is passed to the head can be controlled more precisely, achieving a desired flow rate of extruded material is facilitated, which improves the overall accuracy of the manufacturing process.

The method may further comprise providing, by the feeder, the marks to the filament when passing the filament to the head.

For instance, the feeder may comprise a drive gear that leaves marks on the filament when feeding the filament by pressure to the head.

The method may further comprise determining a feeder contact pressure by analyzing the marks and comparing the analysis results to a reference.

For instance, a depth of the indentations left by the drive gear on the filament may be compared to a reference. If the mean depth is smaller than expected, the contact pressure may be increased, or the user may be prompted to manually increase the contact pressure. If the mean depth is larger than expected, the contact pressure may be decreased, or the user may be prompted to manually decrease the contact pressure.

The method may further comprise determining a feeder wear by analyzing the marks and comparing the analysis results to a first reference and providing an alert, if the comparison indicates that the feeder requires maintenance or replacement.

For instance, a height profile of the indentations may be compared to a reference and if the mean depth is smaller and the profile is less pointed than expected, a user may be prompted to check/replace the feeder or feeder components.

The method may further comprise determining a feeder slippage by analyzing the marks and comparing the analysis results to a second reference, and halting a manufacturing process, if the comparison indicates that slippage occurs.

For instance, a height profile of the indentations may be compared to a second reference and if the mean depth is larger and the profile is less pointed than expected, a user may be prompted to check the feeder for slippage. Moreover, analyzing the marks and comparing the marks to the second reference may also be performed when calibrating the feeder. For example, the feeding speed may be adapted in accordance with an adjustment factor derived from the comparison.

The feeder may be configured to provide a series of discernible marks to the filament and comparing the analysis results to a second reference may include determining that a mark is missing.

For instance, the centers of the teeth of the drive gear may be spaced apart from each other in a direction perpendicular to the feeding direction such that each indentation can be mapped to a tooth by its lateral (circumferential) position on the filament. Alternatively or in addition, the teeth or tooth-tips may be differently shaped resulting in indentations of different shapes and/or dimensions.

It will be appreciated that the features and attendant advantages of the disclosed system may be realized by the disclosed method and vice versa.

### BRIEF DESCRIPTION OF THE DRAWINGS

The foregoing aspects and many of the attendant advantages will become more readily appreciated as the same becomes better understood by reference to the following detailed description, when taken in conjunction with the accompanying drawings, wherein like reference numerals refer to like parts throughout the various views, unless otherwise specified.
Fig. 1 schematically illustrates an exemplary additive manufacturing system;
Fig. 2 shows a marked filament that may be used with the system of Fig. 1;
Fig. 3a illustrates a process of marking the filament within the system of Fig. 1;
Fig. 3b illustrates another process of marking the filament within the system of Fig. 1;
Fig. 4 illustrates a depth profile of an indentation used as a reference mark;
Fig. 4a-Fig. 4d illustrate depth profiles of indentations that may be indicative of a system malfunction;
Fig. 5a-Fig. 5c show sensors to detect the marks;
Fig. 6a shows a series of discernible marks according to a first example;
Fig. 6b shows a series of discernible marks according to a second example; and
Fig. 7 shows a flow-diagram of an additive manufacturing method.
Notably, the drawings are not drawn to scale and unless otherwise indicated, they are merely intended to conceptually illustrate the structures and procedures described herein.

### DETAILED DESCRIPTION

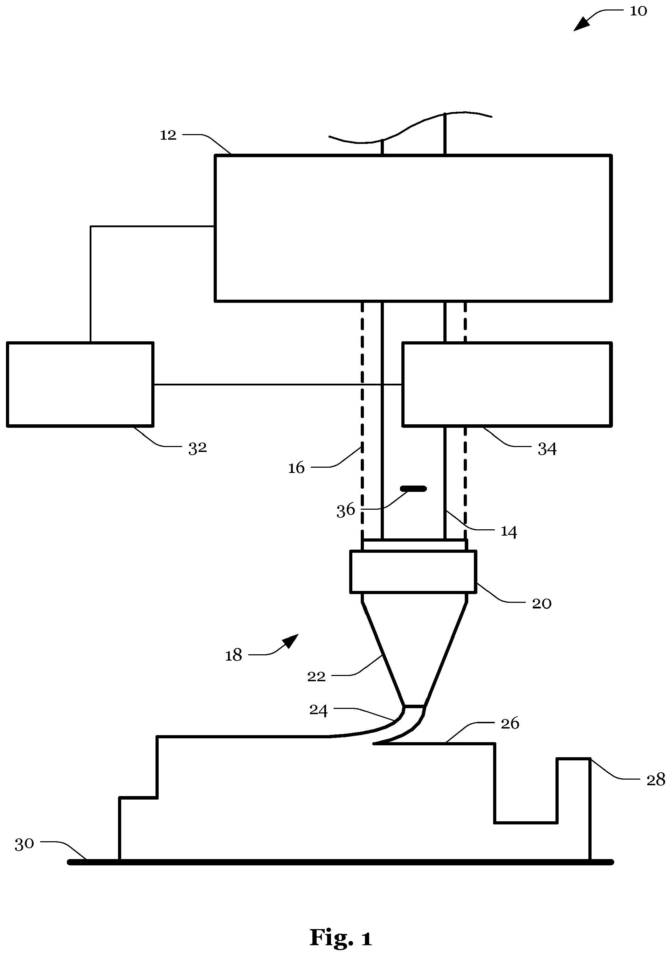

Fig. 1 schematically illustrates an exemplary additive manufacturing system 10. The system 10 comprises a feeder 12 that draws a filament 14 from a supply unit (not shown). The feeder 12 may feed the filament 14 (by force) into a tube 16 connected to the head 18 (Bowden feeder) or the feeder 12 may feed the filament 14 directly to the head 18 (direct feeder). The head 18 may have a heating element 20 for increasing the flowability of the filament 14 and a nozzle 22 through which the flowable filament material 24 is extruded. If the extruded material 24 is deposited on a previously deposited layer 26, the deposited material 24 may fuse with the layer 26, thereby growing the object 28 to be manufactured (fused filament fabrication).

The object 28 may be placed on a support 30, wherein a three-dimensional relative motion between the support 30 and the head 18 is controlled by a controller 32. For instance, the controller 32 may be connected to three stepper motors (not shown), where each stepper motor enables a relative motion between the support 30 and the head 18 along one axis of a Cartesian coordinate system. The controller 32 may store a G-code comprising instructions on the relative motion as well as on a required material stream through the nozzle 22. As stated above, the controller 32 may (only) store a relative motion path, and the relative speed may be chosen such that a force at which the filament 14 is fed to the head 18, or a pressure within the nozzle 22, remains (substantially) constant throughout the manufacturing process. Notably, the material stream may be constant, but may also change with the relative position between the support 30 and the head 18.

To control the material stream through the nozzle 22, or the pressure within the nozzle 22, the controller 32 may be connected to and control the feeder 12. I.e., the feeder 12 may increase or decrease a speed at which the filament 14 is fed to the head 18 based on signals or instructions received from the controller 32. The controller 32 may also be connected to a detector 34 which is configured to detect marks 36 on the surface of the filament 14, as the filament 14 passes by the detector 34. The detected marks 36 may be used as an indictor for the speed at which the filament 14 is fed to the head 18. The controller 32 may use the signals or data provided by the detector 34 (on the detected marks 36) to determine whether a speed at which the filament 14 is passed to the head 18 is as intended, or whether the feeding speed requires adjustment.

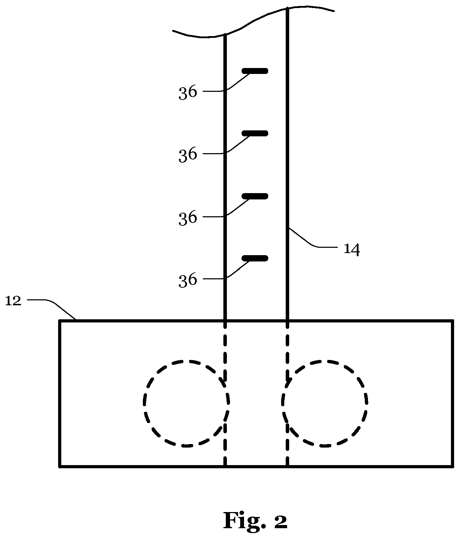

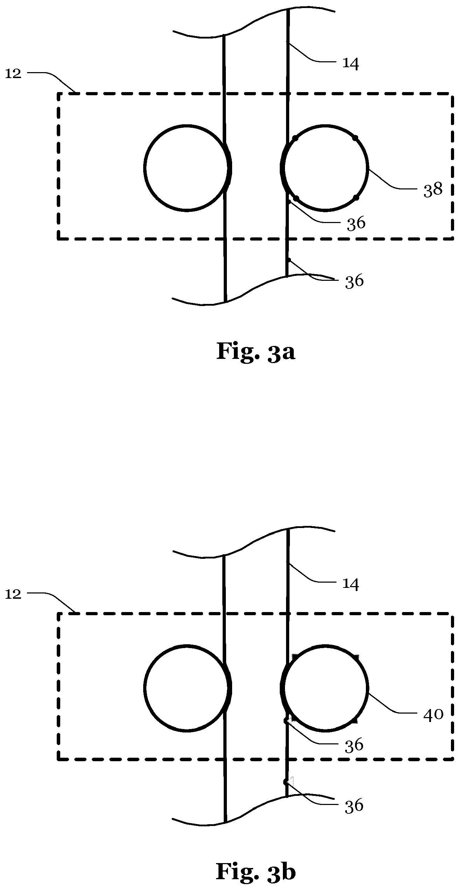

As shown in Fig. 2, the marks 36 may be equally spaced apart along the filament 14 feeding direction. The marks 36 may be provided by heat-sensitive pigments or indentations 42, 42a-42d. Moreover, the marks 36 may be placed at an area (of the filament 14) that does not have mechanical contact to the feeder 12, to avoid that the marks 36 are damaged or overwritten. According to another example shown in Fig. 3a and Fig. 3b, the marks 36 may be provided to the filament 14 (inline) within the system 10. This may be achieved by a dedicated marking unit (not shown) or, as illustrated in Fig. 3a and Fig. 3b, by marking the filament 14 as the filament 14 passes through the feeder 12.

The marking process in Fig. 3a is performed by adding a material to the filament 14. For example, the feeder 12 may comprise a pinch wheel 38 (or a printing or stamping unit) that prints/stamps marks 36 onto the filament 14. The (pigments of the) printed/stamped marks 36 may either be destroyed when the filament 14 is heated-up, or the pigments may be removed from the filament 14 (e.g., by a wiping unit) ahead of extrusion. As shown in Fig. 3b, the marking process may also be performed by embossing. For example, the feeder 12 may comprise a drive gear 40 with sharp edges that leave indentations 42, 42a-42d on the filament 14.

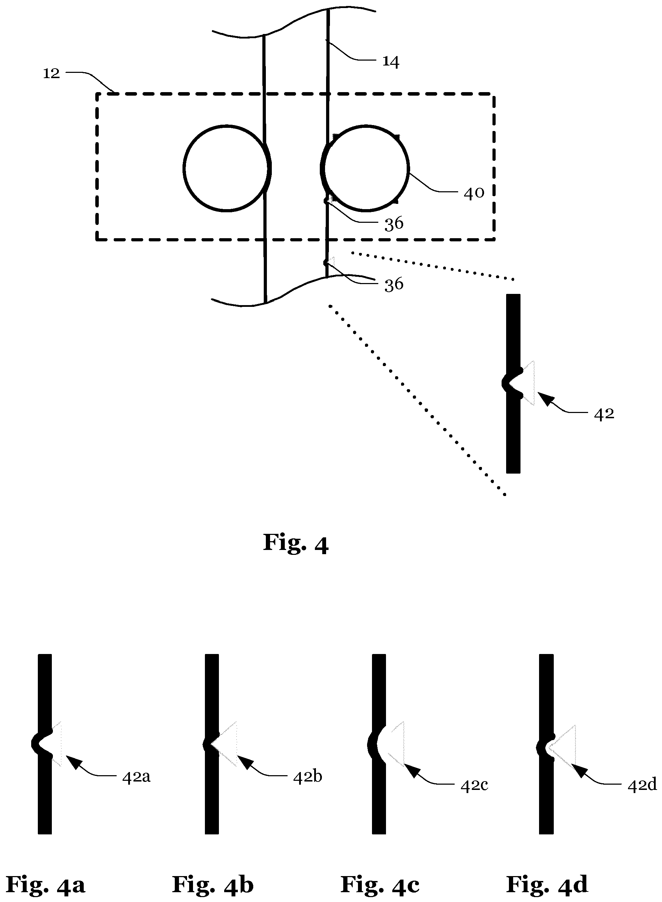

Fig. 4 shows a reference depth profile of an indentation 42 (i.e. a depth profile which is to be expected if the system 10 operates as intended). Fig. 4a-4d show depth profiles (of indentations 42a-42d) which differ from the reference shown in Fig. 4 and may be indicative of a system 10 misconfiguration or malfunction. For example, Fig. 4a shows an indentation 42a which is too deep (compared to the reference indentation 42). This may be caused by a contact pressure of the gear drive 40 and the filament 14 which is too high.

Moreover, Fig. 4b shows an indentation 42b which is not deep enough (compared to the reference indentation 42). This may be caused by a contact pressure of the gear drive 40 and the filament 14 which is not high enough. Furthermore, Fig. 4c shows an indentation 42c which is too wide (compared to the reference indentation 42). This may be caused by slippage. In addition, Fig. 4c shows an indentation 42d which is not pointed enough (compared to the reference indentation 42). This may be caused by wear.

In any such case, the user may be alerted and/or a maintenance action may be performed to resolve the underlying issue. Notably, a similar analysis may be performed if marks 36 are added to the filament 14 as illustrated in Fig. 3a. I.e., the marks 36 provided by the feeder 12 (in the process of feeding the filament 14 to the head 18) may be used to monitor the state of the feeder 12 (components).

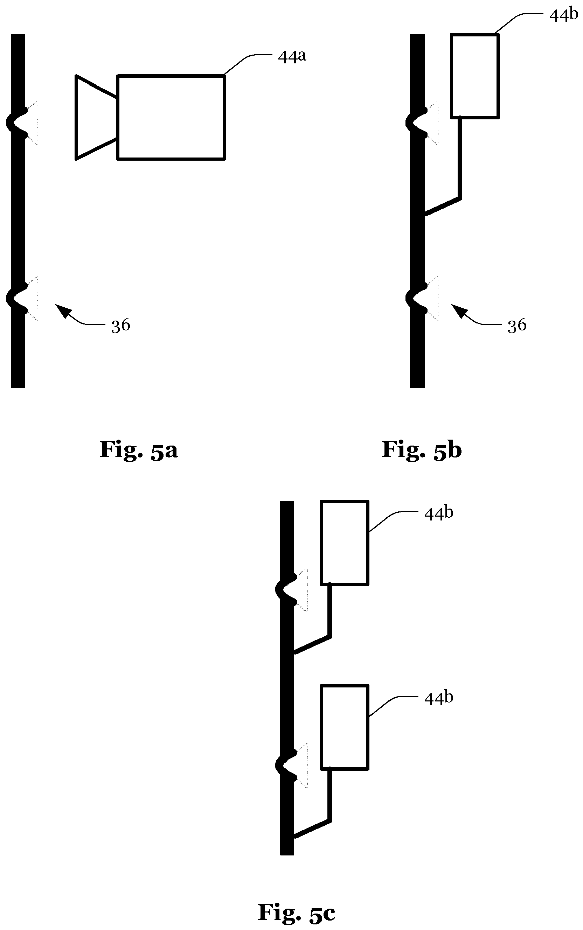

Fig. 5a-Fig. 5c illustrate sensors 44a, 44b which may be used to detect and/or analyze the marks 36. Fig. 5a illustrates an optical sensor 44a that is configured to take images of the filament 14 surface. The images may be provided to a processing unit (not shown) of the detector 34. The processing unit may perform feature extraction and analyze the extracted features to detect mark 36 features. If a pixel size is available, the filament 14 speed may be calculated from the shift of a mark 36 between consecutively taken images. Instead of an optical sensor 44a that takes 2-dimensional images of the filament surface, a mark may also be detected by measuring the intensity of light reflected at the surface of the filament, which may change when a mark 36 passes by.

Fig. 5b illustrates a tactile sensor 44b that is configured to detect indentations 42, 42a-42d and allows to record a depth profile for each detected indentation 42, 42a-42d for further processing as described in more detail in relation to Fig. 4 and Fig. 4a-Fig. 4d. If the size of a mark 36 or a distance between marks 36 is available, the filament 14 speed may be calculated using a single tactile sensor 44b. If the size of a mark 36 and the distance between marks 36 is not available, the filament 14 speed may be calculated using two optical sensors 44a, an optical sensor 44a and a tactile sensor 44b, or two tactile sensors 44b that are arranged at a given distance from each other along the filament 14 path, as shown in Fig. 5c.

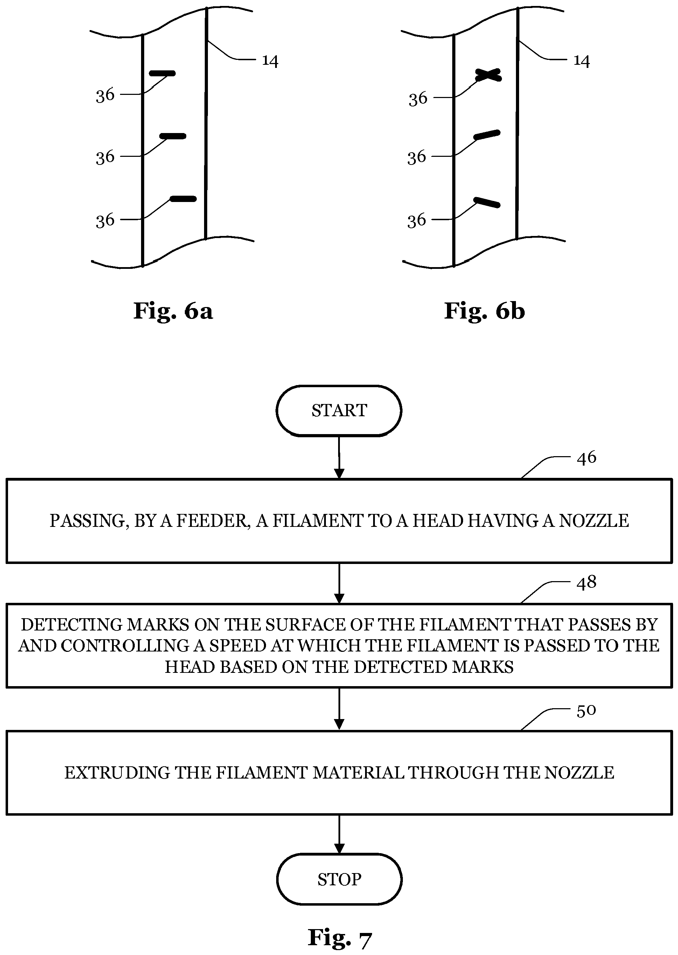

Fig. 6a and Fig. 6b illustrate series of discernible marks 36. For example, the centers of the teeth of the drive gear 40 may be spaced apart from each other in a direction perpendicular to the filament 14 feeding direction such that each mark 36 (of the series) can be mapped to a tooth by its lateral position on the filament 14 surface, as shown in Fig. 6a. If slippage occurs, a mark 36 may be produced which does not fit to the mark 36 (that is expected) such that the detector 34 may report a mark 36 as missing or inaccurate and conclude that slippage has occurred. As shown in Fig. 6b, the marks 36 can also be discernible by having different shapes.

Fig. 7 shows a flow-chart of an additive manufacturing process. The process starts at step 46 with passing, by the feeder 12, the filament 14 to the head 18. While passing the filament 14 to the head 18, a step 48 of detecting marks 36 on the surface of the filament 14 that passes by is performed. The speed at which the filament 14 is passed to the head 18 may then be controlled based on the detected marks 36. At step 50, the filament material may be extruded through the nozzle 22 of the head 18.

### LIST OF REFERENCE NUMERALS

- 10: additive manufacturing system
- 12: feeder
- 14: filament
- 16: tube
- 18: head
- 20: heating element
- 22: nozzle
- 24: material
- 26: layer
- 28: object
- 30: support
- 32: controller
- 34: detector
- 36: marks
- 38: pinch wheel
- 40: drive gear
- 42: indentation
- 42a-42d: indentations
- 44a, 44b: sensors
- 46: process step
- 48: process step
- 50: process step

## Claims

1. An additive manufacturing system (10), comprising:
a head (18) having a nozzle (22);
a feeder (12);
a detector (34); and
a controller (32); wherein
the system (10) is configured to extrude a material which is passed to the head (18) by the feeder (12) through the nozzle (22);
the detector (34) is configured to detect marks (36) on the surface of the material; and
the controller (32) is configured to control a speed at which the material is passed to the head (18) by the feeder (12), based on the detected marks (36).

2. The additive manufacturing system (10) of claim 1, wherein the detector (34) comprises an optical sensor (44a).

3. The additive manufacturing system (10) of claim 1 or 2, wherein the detector (34) comprises a tactile sensor (44b).

4. The additive manufacturing system (10) of any one of claims 1-3, wherein the feeder (12) is configured to provide the marks (36) to the material.

5. The additive manufacturing system (10) of claim 4, wherein the detector (34) is configured to determine the speed at which the material is passed to the head (18) based on measuring a time interval between a first instant at which the detector (34) detects a first mark (36) and a second instant at which the detector (34) detects a second mark (36).

6. The additive manufacturing system (10) of claim 4 or 5, wherein the marks (36) are indentations (42, 42a-42d) and the detector (34) is configured to analyze the indentations (42, 42a-42d) for feeder (12) contact pressure.

7. The additive manufacturing system (10) of any one of claims 4-6, wherein the marks (36) are indentations (42, 42a-42d) and the detector (34) is configured to analyze the indentations (42, 42a-42d) for feeder (12) wear.

8. The additive manufacturing system (10) of any one of claims 4-7, wherein the marks (36) are indentations (42, 42a-42d) and the detector (34) is configured to analyze the indentations (42, 42a-42d) for feeder (12) slippage.

9. The additive manufacturing system (10) of claim 8, wherein the feeder (12) is configured to provide a series of discernible marks (36) to the filament (14) and the detector (34) is configured to assess missing marks (36) as a sign of slippage.

10. The additive manufacturing system (10) of any one of claims 4-9, wherein the detector (34):
comprises two sensors (44a, 44b) that are arranged at a pre-determined distance along the material path; and
is configured to determine a time that passes between a first instant at which a first sensor (44a, 44b) of the two sensors (44a, 44b) detects a mark (36) and a second instant at which a second sensor (44a, 44b) of the two sensors (44a, 44b) detects said mark (36).

11. An additive manufacturing method, comprising:
passing (46), by a feeder (12), a filament (14) to a head (18) having a nozzle (22);
while passing the filament (14) to the head (18), detecting (48) marks (36) on the surface of the filament (14) that passes by and controlling a speed at which the filament (14) is passed to the head (18) based on the detected marks (36); and
extruding (50) the filament (14) material through the nozzle (22).

12. The additive manufacturing method of claim 11, further comprising:
providing, by the feeder (12), the marks (36) to the filament (14) when passing the filament (14) to the head (18).

13. The additive manufacturing method of claim 12, further comprising:
determining a feeder (12) contact pressure by analyzing the marks (36) and comparing the analysis results to a reference.

14. The additive manufacturing method of claim 12 or 13, further comprising:
determining a feeder (12) wear by analyzing the marks (36) and comparing the analysis results to a first reference; and
providing an alert, if the comparison indicates that the feeder (12) requires maintenance or replacement.

15. The additive manufacturing method of any one of claims 12-14, further comprising:
determining a feeder (12) slippage by analyzing the marks (36) and comparing the analysis results to a second reference; and
halting a manufacturing process, if the comparison indicates that slippage occurs.

16. The additive manufacturing method of claim 15, wherein:
the feeder (12) is configured to provide a series of discernible marks (36) to the filament (14); and
comparing the analysis results to a second reference includes determining that a mark (36) is missing.
